# EUROPÄISCHE PATENTSCHRIFT

(11) **EP 3 903 615 B1**
(45) Veröffentlichungstag und Bekanntmachung des Hinweises auf die Patenterteilung: **07.06.2023**
(21) Anmeldenummer: 21169789.1
(22) Anmeldetag: 22.04.2021
(51) Int. Cl.: A42B 3/10, A42B 3/14

(54) **SCHUTZHELM MIT MECHANISCHEN CODIERUNGEN FÜR STECKVERBINDUNGEN ZWISCHEN INNENAUSSTATTUNG UND TRAGSTRUKTUR**
PROTECTIVE HELMET WITH CONNECTIONS BETWEEN INTERIOR EQUIPMENT AND SUPPORTING STRUCTURE
CASQUE DE PROTECTION AVEC CONNEXIONS ENFICHABLES ENTRE L'AMÉNAGEMENT INTÉRIEUR ET LA STRUCTURE PORTEUSE

(30) Priorität: 30.04.2020 DE 102020002614
(43) Veröffentlichungstag der Anmeldung: 03.11.2021
(73) Patentinhaber: Dräger Safety AG & Co. KGaA, 23560 Lübeck (DE)
(72) Erfinder: Franke, Katja, 23558 Lübeck (DE); Rahmatyan, Jasser, 23558 Lübeck (DE)
(74) Vertreter: Meyer-Gramann, Klaus Dieter

(56) Entgegenhaltungen:
- EP-A2- 0 184 528
- US-A1- 2015 059 057

## Beschreibung

Die Erfindung betrifft einen Schutzhelm mit einer gewölbten Helmschale aus einem harten Material, einer innen an der Helmschale befestigten Tragstruktur und einer Innenausstattung. Die Tragstruktur trägt die Innenausstattung. Die Innenausstattung liegt wenigstens teilweise an der Kopfhaut des Trägers an und ist wenigstens teilweise aus einem textilen und / oder elastischen Material hergestellt. Die Innenausstattung ist lösbar mit der Tragstruktur verbunden oder mit dieser verbindbar.

Ein Schutzhelm schützt den Kopf des Trägers vor mechanischen, thermischen und / oder chemischen Umgebungseinflüssen. Der Träger ist beispielsweise eine Einsatzkraft, die Menschen aus einem Raum rettet, wobei dieser Raum mit für Menschen schädlichen Rauchgasen belastet ist. Bei einem solchen Einsatz können der Schutzhelm und insbesondere die Innenausstattung Schadstoffpartikel aufnehmen. Daher muss der Schutzhelm nach einem solchen Einsatz gereinigt werden. Die Innenausstattung umfasst in der Regel textile Bestandteile und muss daher auf eine andere Weise gereinigt werden als der Rest des Schutzhelms. Deshalb ist es nach einem Einsatz häufig erforderlich, die Innenausstattung von der Tragstruktur zu lösen und nach der Reinigung wieder mit der Tragstruktur zu verbinden.

Der Erfindung liegt die Aufgabe zugrunde, einen Schutzhelm mit einer gewölbten Helmschale, einer innen an der Helmschale befestigten Tragstruktur und einer lösbar mit der Tragstruktur verbundenen oder verbindbaren Innenausstattung bereitzustellen, wobei die Verbindung zwischen der Innenausstattung und der Tragstruktur sich besser herstellen und wieder lösen lässt als bei bekannten Schutzhelmen.

Die Aufgabe wird durch einen Schutzhelm mit den Merkmalen des Anspruchs 1 gelöst. Vorteilhafte Ausgestaltungen sind in den Unteransprüchen angegeben.

Der erfindungsgemäße Schutzhelm umfasst eine gewölbte Helmschale, eine Tragstruktur, eine Innenausstattung und mindestens zwei Verbindungseinheiten, bevorzugt drei oder sogar noch mehr Verbindungseinheiten.

Die Innenausstattung kommt wenigstens bereichsweise in Kontakt mit dem Kopf eines Trägers des Schutzhelms und lässt sich lösbar mit der Tragstruktur verbinden. Bevorzugt umfasst die Innenausstattung aus mindestens einem flexiblen und biegsamen Material und lässt sich waschen oder auf eine andere Weise reinigen.

Die Tragstruktur ist innen an der Helmschale befestigt. Wenn die Innenausstattung mit der Tragstruktur verbunden ist, so hält die Tragstruktur die Innenausstattung.

Jede Verbindungseinheit umfasst jeweils eine tragstrukturseitige Komponente, die zur Tragstruktur gehört, und eine innenausstattungsseitige Komponente, die zur Innenausstattung gehört. Über die Tragstruktur ist die tragstrukturseitige Komponente mit der Helmschale verbunden.

Jede tragstrukturseitige Komponente gehört zu genau einem Verbindungs-Typ. Jede innenausstattungsseitige Komponente gehört ebenfalls zu genau einem Verbindungs-Typ. Der Schutzhelm weist mindestens zwei unterschiedliche Verbindungs-Typen auf. Zu jedem Verbindungs-Typ gehört jeweils mindestens eine tragstrukturseitige Komponente und mindestens eine innenausstattungsseitige Komponente.

Eine tragstrukturseitige Komponente lässt sich dann mit einer innenausstattungsseitigen Komponente verbinden, wenn diese beiden Komponenten zu demselben Verbindungs-Typ gehören. Zwei Komponenten desselben Verbindungs-Typs vermögen eine lösbare Verbindung zwischen der Innenausstattung und der Tragstruktur herzustellen. Eine tragstrukturseitige Komponente eines Verbindungs-Typs lässt sich in einer Alternative nicht mit einer innenausstattungsseitigen Komponente verbinden, wenn diese beiden Komponenten zu zwei verschiedenen Verbindungs-Typen gehören. In einer anderen Alternative vermögen diese beiden Komponenten keine dauerhafte Verbindung zwischen der Tragstruktur und der Innenausstattung herzustellen, sondern lösen sich von selbst wieder voneinander.

Erfindungsgemäß ist die Innenausstattung mit der Tragstruktur verbunden. Die Tragstruktur trägt die Innenausstattung und hält die Innenausstattung bis zu einem gewissen Grade an einer bestimmten Position relativ zur Helmschale. Über die Tragstruktur ist die Innenausstattung indirekt mit der Helmschale verbunden. Daher und weil die Innenausstattung in Kontakt mit dem Kopf eines Trägers des Schutzhelms kommt, trägt die Innenausstattung dazu bei, die Helmschale in einer gewünschten Position auf dem Kopf zu halten.

Erfindungsgemäß lässt sich die Innenausstattung lösbar mit der Tragstruktur verbinden, d.h. sie lässt sich mit der Tragstruktur verbinden und auch wieder von der Tragstruktur und damit vom Rest des Schutzhelms lösen und aus dem Schutzhelm nehmen. Die vom Rest des Schutzhelms getrennte Innenausstattung lässt sich separat vom Rest reinigen und säubern und bei Bedarf reparieren oder auch komplett erneuern. Ein Vorgang, um die Innenausstattung zu reinigen, kann auf das Material und / oder eine physikalische Eigenschaft der Innenausstattung zugeschnitten sein.

Bei vollständig hergestellter Verbindung ist die Innenausstattung mithilfe von mehreren Verbindungseinheiten, also an mehreren Verbindungspunkten, mit der Tragstruktur verbunden. Das Merkmal, dass die Innenausstattung an mehreren Verbindungspunkten und nicht nur in einem Verbindungspunkt mit der Tragstruktur verbunden ist, verringert die Gefahr, dass die Tragstruktur sich von selbst relativ zur Innenausstattung bewegt, während ein Träger den Schutzhelm trägt. Dadurch wird der Schutzhelm mit größerer Sicherheit auf dem Kopf eines Trägers gehalten, als wenn nur ein Verbindungspunkt vorhanden wäre. Mit größerer Sicherheit wird daher verhindert, dass der Schutzhelm rutscht.

Die beiden Komponenten einer Verbindungseinheit lassen sich von Hand miteinander verbinden und auch von Hand auch wieder lösen. Weder zum Herstellen noch zum Lösen der beiden Komponenten wird ein Werkzeug benötigt. Im Bedarfsfall kann ein solches Werkzeug nicht zur Verfügung stehen. Außerdem erfordert in vielen Fällen der Einsatz eines Werkzeugs mehr Zeit als das Herstellen oder das Lösen der Verbindung von Hand. Die Erfindung vermeidet die Nachteile, die entstehen würden, wenn ein Werkzeug zum Herstellen oder zum Lösen der Verbindung verwendet werden müsste.

Erfindungsgemäß weist der Schutzhelm mindestens zwei unterschiedliche Verbindungs-Typen auf. Jede tragstrukturseitige Komponente und jede innenausstattungsseitige Komponente gehört zu jeweils genau einem Verbindungs-Typ. Jede Verbindungseinheit, welche eine lösbare Verbindung zwischen der Innenausstattung und der Tragstruktur herzustellen vermag, gehört daher ebenfalls zu genau einem Verbindungs-Typ, also zu einem und nur zu einem Verbindungs-Typ.

Eine tragstrukturseitige Komponente eines Verbindungs-Typs und eine innenausstattungsseitige Komponente desselben Verbindungs-Typs lassen sich lösbar miteinander verbinden. Eine tragstrukturseitige Komponente eines Rastverbindungs-Typs und eine innenausstattungsseitige Komponente eines anderen Verbindungs-Typs lassen sich nicht miteinander verbinden oder sind nicht in der Lage, dauerhaft eine Verbindung herzustellen. Dieses Merkmal bedeutet: Die beiden Komponenten lassen sich zwar miteinander verbinden, oder die eine Komponente lässt sich zwar in die andere Komponente einführen. Die beiden Komponenten können sich aber bei einem bestimmungsgemäßen Einsatz des Schutzhelms von selber wieder voneinander lösen. Die Konsequenz: Die beiden Komponenten können keine dauerhafte Verbindung herstellen.

Erfindungsgemäß gehört jede Verbindungseinheit zu genau einem Verbindungs-Typ. Mindestens zwei verschiedene Verbindungs-Typen werden voneinander unterschieden und sind nicht miteinander kompatibel. Dies bedeutet: Eine innenausstattungsseitige Komponente lässt sich nur mit einer passenden tragstrukturseitigen Komponente verbinden, also nur dann, wenn beide Komponenten zu demselben Verbindungs-Typ gehören. Eine innenausstattungsseitige Komponente lässt sich nicht mit einer tragstrukturseitigen Komponente verbinden, wenn diese beiden Komponenten zu zwei verschiedenen Verbindungs-Typen gehören.

Die mindestens zwei verschiedenen Verbindungs-Typen stellen eine mechanische Codierung bereit. Denn eine tragstrukturseitige Komponente ist nur dann mit einer innenausstattungsseitigen Komponente kompatibel, wenn die beiden Komponenten zu demselben Verbindungs-Typ gehören. Diese mechanische Codierung reduziert die Gefahr, dass die Innenausstattung falsch mit der Tragstruktur verbunden wird, insbesondere in einer falschen Position. Ein Benutzer ist in der Regel in der Lage die mechanische Codierung ohne ein Hilfsmittel, insbesondere ohne ein Messgerät oder ein Werkzeug, zu erkennen. Verglichen mit einer Codierung, die Farben oder sonstige visuelle Symbole benutzt, lässt sich die erfindungsgemäße mechanische Codierung auch bei schlechten Lichtverhältnissen und bei einer Verschmutzung erkennen. Die mechanische Codierung erfordert keine elektrischen oder elektronischen Bauteile. Beim Versuch, eine falsche Verbindung zwischen der Innenausstattung und der Tragstruktur herzustellen, wird in der Regel offensichtlich, dass die beiden Komponenten nicht zusammengehören. Somit ist in vielen Fällen intuitiv erkennbar, wie die Innenausstattung korrekt mit der Tragstruktur zu verbinden ist. Dadurch wird Zeit zum Anlernen eines Benutzers des Schutzhelms eingespart.

In einer ersten Ausgestaltung unterscheiden sich zwei innenausstattungsseitige Komponenten von zwei unterschiedlichen Verbindungs-Typen sich durch mindestens einen der folgenden Parameter voneinander:
- durch die geometrischen Form,
- durch die maximale Abmessung,
- durch eine Abmessung in eine Richtung senkrecht zur Richtung der maximalen Abmessung oder
- durch eine sonstige Abmessung.

In einer anderen Ausgestaltung unterscheiden sich zwei tragstrukturseitige Komponenten von zwei unterschiedlichen Verbindungs-Typen sich durch mindestens einen dieser Parameter.

Diese beiden Ausgestaltungen lassen sich miteinander kombinieren. Die Kombination führt zu einer besonders einfachen Form der mechanischen Codierung.

Bevorzugt ist mindestens eine, bevorzugt jede Verbindungseinheit dazu ausgestaltet, jeweils eine lösbare formschlüssige Verbindung zwischen der Innenausstattung und der Tragstruktur herzustellen. Bei hergestellter formschlüssiger Verbindung ist die Gefahr relativ gering, dass die beiden Komponenten der Verbindungseinheit sich von alleine wieder voneinander lösen, was unerwünscht wäre. Dieser formschlüssige Verbindung hat besonders bevorzugt die Form eines Rastverschlusses oder Schnappverschlusses.

Die Ausgestaltung, dass die Verbindungseinheit eine formschlüssige Verbindung bereitstellt, vermeidet die Nachteile eines Klettverschlusses oder eines Reißverschlusses. Ein Klettverschluss oder ein Reißverschluss können verschmutzt oder beschädigt werden. Ein beschädigter Verschluss kann nicht mehr die geforderte Funktion ausüben. Falls eine lösbare Verbindung mithilfe eines Klettverschlusses hergestellt werden würde, so kann es außerdem passieren, dass das eine verbundene Teil relativ zu dem anderen verbundenen Teil falsch positioniert wird.

Erfindungsgemäß umfasst jede Verbindungseinheit eine tragstrukturseitige Komponente und eine innenausstattungsseitige Komponente. Bevorzugt umfasst die eine dieser beiden Komponenten einen Vorsprung und die andere eine Aussparung. Besonders bevorzugt gilt dies für jede Verbindungseinheit, welche die Innenausstattung lösbar mit der Tragstruktur verbindet. Der Vorsprung lässt sich in die Aussparung einführen und wird in dieser Aussparung gehalten, vorausgesetzt die beiden Komponenten gehören zu demselben Verbindungs-Typ. Falls die beiden Komponenten zu unterschiedlichen Verbindungs-Typen gehören, so lässt sich beispielsweise der Vorsprung nicht in die Aussparung einführen. Oder die Aussparung ist zu groß, um den Vorsprung dauerhaft halten zu können.

Dank der Ausgestaltung mit Vorsprung und Aussparung werden alle lösbaren Verbindungen zwischen der Innenausstattung und der Tragstruktur nach dem gleichen Schema hergestellt. Dadurch lässt sich die Innenausstattung auf eine besonders intuitive Weise mit der Tragstruktur verbinden. Diese Verbindung lässt sich in vielen Fällen auch unter Zeitdruck sicher herstellen und wieder lösen, und zwar ohne dass ein Werkzeug benötigt wird und / oder bei schlechten Lichtverhältnissen. Die Ausgestaltung führt somit zu einer noch höheren Betriebssicherheit.

Der Vorsprung einer Komponente lässt sich gemäß dieser Ausgestaltung nur dann in die Aussparung eine anderen Komponente einführen und wird dann dauerhaft in der Aussparung gehalten, wenn die beiden Komponenten zu demselben Verbindungs-Typ gehören. Falls die beiden Komponenten zu verschiedenen Verbindungs-Typen gehören, so lässt sich beispielsweise der Vorsprung nicht in die Aussparung einführen, weil der Vorsprung zu groß ist. Oder die Aussparung ist zu groß, sodass die Aussparung nicht den Vorsprung in der Aussparung zu halten vermag.

In einer ersten Fortbildung dieser Ausgestaltung umfasst jede innenausstattungsseitige Komponente jeweils einen Vorsprung und jede tragstrukturseitige Komponente jeweils eine Aussparung. Bei hergestellter Verbindung zeigt der Vorsprung bevorzugt zur Innenseite der Helmschale hin. In einer anderen Fortbildung dieser Ausgestaltung umfasst jede innenausstattungsseitige Komponente jeweils eine Aussparung und jede tragstrukturseitige Komponente jeweils einen Vorsprung. Bevorzugt zeigt auch in diesem Fall der Vorsprung zur Innenseite der Helmschale oder ist parallel zur gewölbten Fläche der Helmschale angeordnet, zeigt aber nicht zum Kopf eines Trägers.

Diese beiden Fortbildungen lassen sich auch miteinander kombinieren. Beispielsweise ist ein erster Verbindungs-Typ so ausgestaltet, dass die innenausstattungsseitige Komponente einen Vorsprung und die tragstrukturseitige Komponente eine Aussparung aufweist. Ein zweiter Verbindungs-Typ ist so ausgestaltet, dass die tragstrukturseitige Komponente einen Vorsprung und die innenausstattungsseitige Komponente eine Aussparung aufweist. Bei dieser Ausgestaltung können die Vorsprünge einander geometrisch gleichen, und auch die Aussparungen können einander geometrisch gleichen. Die mechanische Codierung wird in diesem Falle dadurch hergestellt, dass bei dem einen Verbindungs-Typ der Vorsprung zur innenausstattungsseitigen Komponente und bei dem anderen Verbindungs-Typ der Vorsprung zur tragstrukturseitigen Komponente gehört.

In einer Realisierungsform dieser Ausgestaltung umfasst der Vorsprung einen Körper, einen Dachabschnitt und einen Stammabschnitt. Der Stammabschnitt ist zwischen dem Dachabschnitt und dem Körper des Vorsprungs angeordnet. Die Aussparung umfasst eine Halteöffnung und einen Steg. Der Steg verbindet die Einführöffnung mit der Halteöffnung.

Diese Realisierungsform ermöglicht es, die Halteöffnung so auszugestalten, dass sie einen größeren Querschnitt als der Stammabschnitts aufweist. Dadurch haben die beiden Komponenten der Verbindungseinheit relativ zueinander auch dann Spiel, wenn sie zu demselben Verbindungs-Typ gehören und die Verbindung hergestellt ist. Diese Wirkung reduziert die Gefahr, dass eine Komponente der Verbindungseinheit beschädigt wird. Die mit der Tragstruktur verbundene Innenausstattung kann sich noch besser an die Kopfgröße und Kopfform eines Trägers in anpassen, insbesondere weil die Innenausstattung sich dank dem Spiel bis zu einem gewissen Grad relativ zur Tragstruktur bewegen kann. Andererseits verhindert der Steg der Aussparung, dass die Verbindung sich ungewollt von allein wieder löst.

In einer anderen Ausgestaltung ist mindestens eine Verbindungseinheit wie folgt ausgestattet: Die eine Komponente der Verbindungseinheit umfasst ein Halteelement, beispielsweise einen Haken oder einen Schnappverschluss, sowie eine Einführöffnung. Die andere Komponente umfasst einen Vorsprung. Das Halteelement der einen Komponente hält den Vorsprung der anderen Komponente, wenn der Vorsprung durch die Einführöffnung hindurch bewegt ist und dadurch die lösbare Verbindung hergestellt ist - natürlich nur, wenn beide Komponenten zu demselben Verbindungs-Typ gehören. Diese Ausgestaltung vermeidet die Notwendigkeit, einen Steg vorzusehen, um den Stammabschnitt zu halten.

In einer Ausgestaltung umfasst die Tragstruktur einen äußeren Bestandteil und einen inneren Bestandteil. Die Bezeichnungen "äußerer" und "innerer" beziehen sich auf den Raum, den die gewölbte Helmschale umschließt. Der äußere Bestandteil ist fest mit der Helmschale verbunden und umfasst bevorzugt einen Haltering. Zwischen dem äußeren Bestandteil und dem Kopf eines Trägers des Schutzhelms tritt ein Abstand auf. Der innere Bestandteil liegt am Kopf eines Trägers des Schutzhelms an und umfasst bevorzugt einen Tragering. Besonders bevorzugt lässt sich die Länge des Tragerings verändern, um die vom Schutzhelm bereitgestellte Kopfweite an den Kopf eines Trägers des Schutzhelms anzupassen.

Gemäß dieser Ausgestaltung ist jede tragstrukturseitige Komponente mit dem äußeren Bestandteil verbunden. Dank dieser Ausgestaltung lässt sich die Innenausstattung lösbar mit dem äußeren Bestandteil verbinden. Indirekt ist die Innenausstattung dadurch mit der Helmschale verbunden. Gemäß diese Ausgestaltung ist die Innenausstattung nicht mit dem inneren Bestandteil verbunden, sodass in vielen Fällen die Innenausstattung und der innere Bestandteil sich unabhängig voneinander an die Form des Kopfes eines Trägers anpassen können. Falls der innere Bestandteil einen Tragering umfasst, dessen Länge sich verändern lässt, so behindert die Innenausstattung nicht die Längenveränderung des Tragerings.

In einer Ausgestaltung werden mindestens die Tragstruktur, die Innenausstattung und jede Verbindungseinheit eines erfindungsgemäßen Schutzhelms von mindestens einem 3D-Drucker erzeugt. Optional werden verschiedene Bestandteile des Schutzhelms von unterschiedlichen 3D-Druckern erzeugt, auch an unterschiedlichen Orten. Die Helmschale wird in einer Ausgestaltung ebenfalls von einem 3D-Drucker erzeugt und in einer anderen Ausgestaltung durch ein anderes Fertigungsverfahren. Bevorzugt werden die Bestandteile zu einem erfindungsgemäßen Schutzhelm zusammengesetzt.

Möglich ist, dass diese Bestandteile von einer Anordnung von 3D-Druckern hergestellt werden, wobei jeder 3D-Drucker jeweils mindestens einen Bestandteil herstellt. Andererseits betrifft die Erfindung ein Computerprogramm, welches auf einem Rechner ausgeführt werden kann. Wird das Computerprogramm auf dem Rechner ausgeführt, so steuert der Rechner mindestens einen 3D-Drucker an. Der angesteuerte 3D-Drucker erzeugt die gerade aufgelisteten Bestandteile des erfindungsgemäßen Schutzhelms. Optional steuert der Rechner mehrere 3D-Drucker für unterschiedliche Bestandteile an. Möglich ist auch, dass verschiedene Computerprogramme jeweils einen Rechner ansteuern, und jeder angesteuerte Rechner erzeugt jeweils einen Bestandteil des erfindungsgemäßen Schutzhelms.

Im Folgenden wird die Erfindung anhand eines Ausführungsbeispiels beschrieben. Hierbei zeigt
- Figur 1: eine Innenausstattung nach dem Stand der Technik;
- Figur 2: in einer perspektivischen Darstellung den Schutzhelm aus einer ersten Betrachtungsrichtung schräg von unten;
- Figur 3: in einer perspektivischen Darstellung den Schutzhelm aus einer zweiten Betrachtungsrichtung schräg von unten;
- Figur 4: in einer perspektivischen Darstellung den Schutzhelm aus einer Betrachtungsrichtung senkrecht von unten;
- Figur 5: in einer perspektivischen Darstellung den Schutzhelm aus einer dritten Betrachtungsrichtung schräg von unten, wobei die Dämpfungsschale und die Trageringe fortgelassen sind;
- Figur 6: in einer perspektivischen Darstellung den Schutzhelm von Figur 5 aus einer vierten Betrachtungsrichtung von der Seite;
- Figur 7: in einer perspektivischen Darstellung das vorderen Haltering-Teil aus einer ersten Betrachtungsrichtung;
- Figur 8: in einer perspektivischen Darstellung das vordere Haltering-Teil aus einer zweiten Betrachtungsrichtung;
- Figur 9: in einer perspektivischen Darstellung das hintere Haltering-Teil;
- Figur 10: eine Aussparung des ersten Aussparungs-Typs und eine Aussparung des zweiten Aussparungs-Typs;
- Figur 11: das vordere Tragering-Teil und das Zwischenstück in einer ersten Betrachtungsrichtung;
- Figur 12: das vordere Tragering-Teil und das Zwischenstück in einer zweiten Betrachtungsrichtung;
- Figur 13: das rechte hintere Tragering-Teil in einer perspektivischen Darstellung;
- Figur 14: aus zwei verschiedenen Betrachtungsrichtungen ein Befestigungselement des ersten Befestigungs-Typs;
- Figur 15: aus zwei verschiedenen Betrachtungsrichtungen ein Befestigungselement des zweiten Befestigungs-Typs.

Die Erfindung betrifft einen Schutzhelm, der von Feuerwehrleuten, Polizisten, Rettungskräften und anderen Einsatzkräften auf dem Kopf wird, damit der Kopf des Trägers besser vor mechanischen, thermischen und chemischen Einflüssen geschützt ist.

Der Schutzhelm des Ausführungsbeispiels umfasst so wie viele andere Schutzhelme eine gewölbte Helmschale aus einem harten Material, eine Tragstruktur und eine Innenausstattung. Optional ist zwischen der Helmschale und der Innenausstattung eine gewölbte Dämpfungsschale angeordnet, welche kinetische Energie absorbiert. Die Innenausstattung liegt am Kopf eines Menschen an, der diesen Schutzhelm auf seinem Kopf trägt, trägt dazu bei, den Schutzhelm auf dem Kopf zu halten, und ist wenigstens teilweise aus mindestens einem textilen Material hergestellt, umfasst also textile Bestandteile. Dieser Mensch wird im Folgenden "der Träger" genannt.

Die nachfolgend verwendeten Bezeichnungen "links", "rechts", "vorn", "hinten", "oben" und "unten" beziehen sich auf die üblichen Orientierungen, wenn der Schutzhelm auf dem Kopf des Trägers sitzt und der Träger waagerecht nach vorn blickt. Die Tragstruktur im Inneren des Schutzhelms verbindet die Helmschale mit der Innenausstattung und ist aus mindestens einem festen, aber biegsamen Kunststoff hergestellt.

Die Tragstruktur umfasst im Ausführungsbeispiel
- einen äußeren Bestandteil, der fest mit der Helmschale verbunden ist, sowie
- einen inneren Bestandteil, der an dem Kopf des Trägers anliegt.

Der äußere Bestandteil umfasst mehrere Haltering-Teile, die fest mit der Helmschale verbunden sind, d. h. im regulären Betrieb nicht von der Helmschale gelöst werden. Die Haltering-Teile bilden zusammen einen umlaufenden Haltering, der innen an der gewölbten Helmschale angeordnet ist. Der innere Bestandteil umfasst mehrere Tragering-Teile, die zusammen einen durchgehenden Tragering bilden. Dieser Tragering ist um den Kopf des Trägers herumgeführt, umgibt den Kopf vollständig und stellt eine Kopfweite bereit, die sich verändern lässt.

Jedes textile Bauteil der Innenausstattung ist lösbar an der Tragstruktur befestigt. Im Ausführungsbeispiel ist jedes textile Bauteil an dem äußeren Bestandteil befestigt, bevorzugt an einem Haltering, aber nicht an dem inneren Bestandteil.

Wenn der Träger den Schutzhelm in einem Bereich verwendet, der mit gasförmigen Schadstoffen und / oder Schadstoffpartikeln gefüllt sein kann, beispielsweise in einem brennenden oder verrauchten Raum, so nimmt der Schutzhelm Schadstoffpartikel auf. Die Schadstoffbelastung der textilen Bauteile ist in der Regel größer als die Schadstoffbelastung anderer Bauteile des Schutzhelms, und außerdem kommen diese textilen Bauteile mit dem Kopf des Trägers in Berührung. Daher müssen diese textilen Bauteile nach jedem Einsatz gereinigt und / oder regelmäßig dekontaminiert werden, und zwar mit einem für textile Bauteile geeigneten Verfahren, welches sich in der Regel nicht für den Rest des Schutzhelms eignet. Eine wirkungsvolle Reinigung und Dekontamination erfordern daher, dass die textilen Bauteile aus dem Schutzhelm herausgenommen werden und separat vom Rest des Schutzhelms in geeigneter Weise dekontaminiert werden, beispielsweise in einer Industrie-Waschmaschine. Die dekontaminierten textilen Bauteile müssen anschließend wieder in den Schutzhelm eingesetzt werden. Das Herausnehmen und das Einsetzen soll wenig Zeit erfordern. Die Gefahr, dass ein textiles Bauteil falsch eingesetzt wird, soll verringert werden.

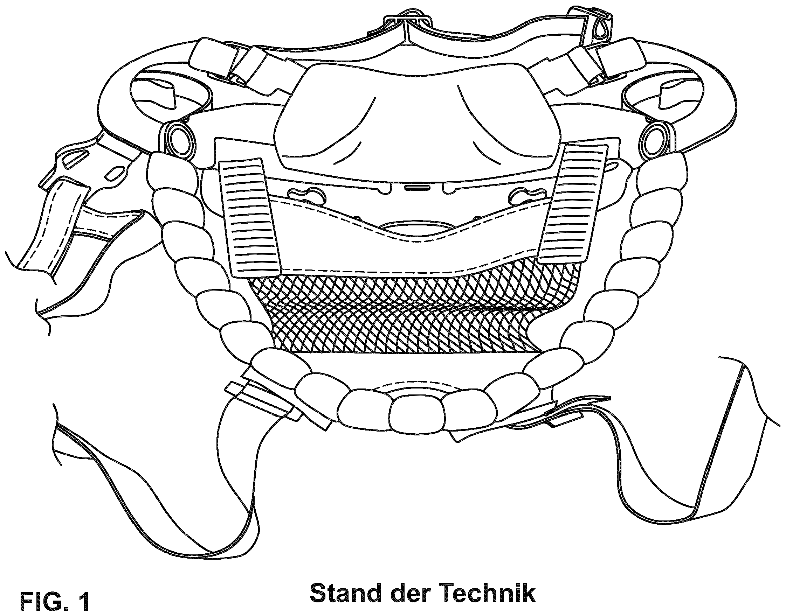

Figur 1 zeigt ein textiles Bauteil gemäß dem Stand der Technik mit vielen Bändern und Matten und weiteren Komponenten, wobei das textile Bauteil zu einer Innenausstattung gehört.

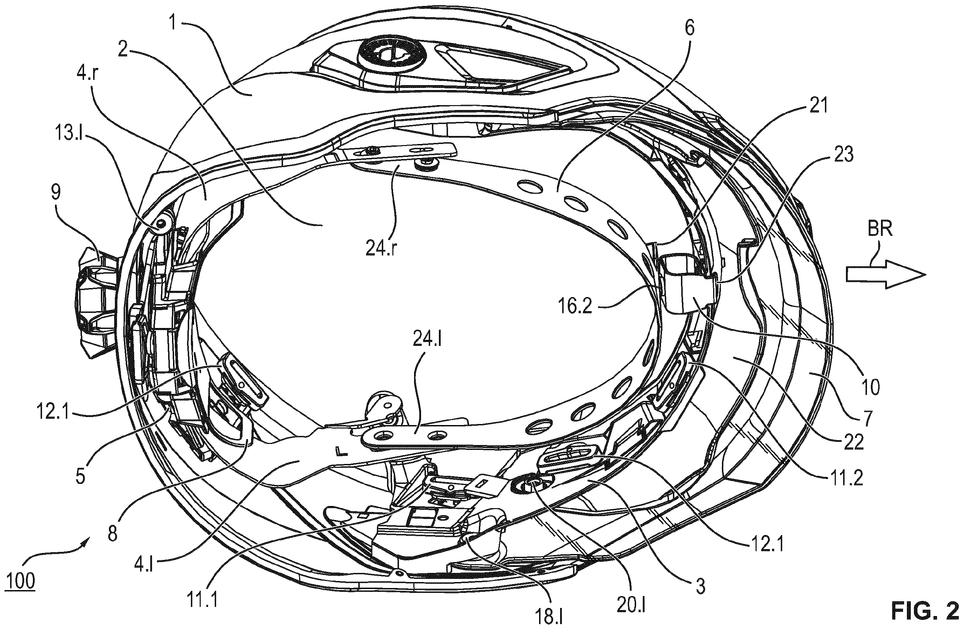

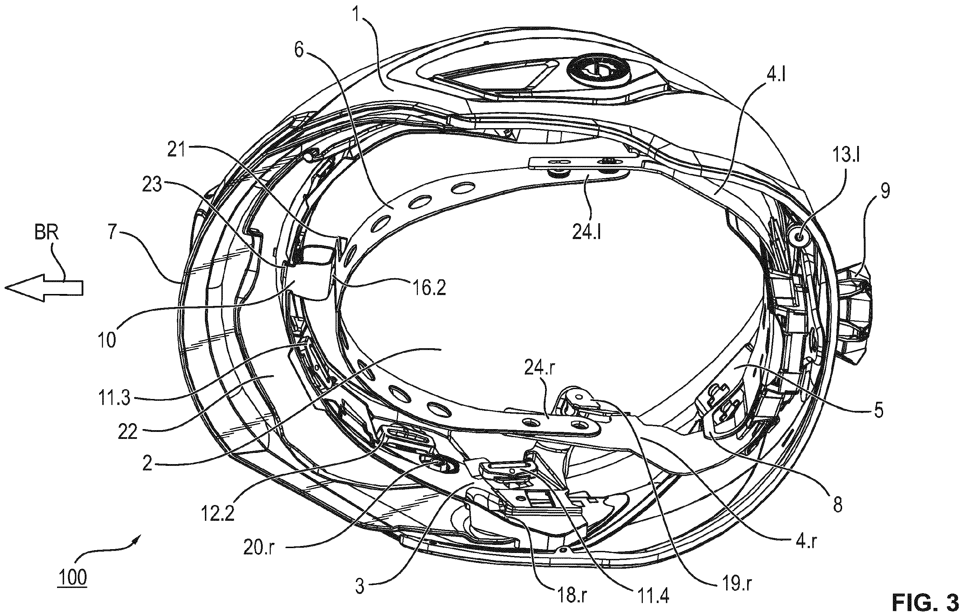

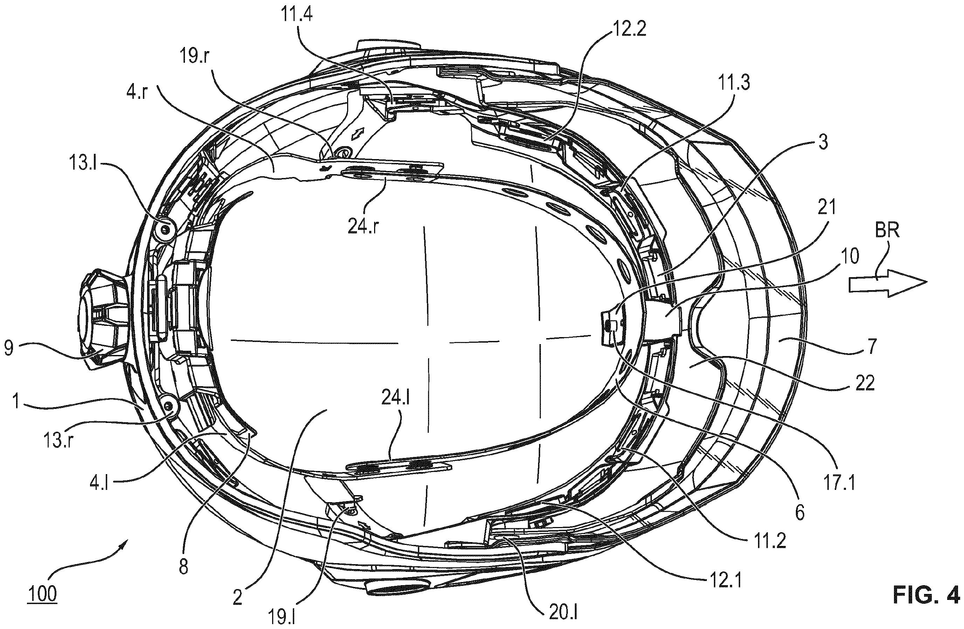

Figur 2 bis Figur 6 zeigen einen erfindungsgemäßen Schutzhelm 100. In diesen Figuren sind die eigentlichen textilen Bauteile fortgelassen, während einzelne Befestigungselemente für textile Bauteile der Innenausstattung dargestellt sind. Die Blickrichtung BR des nach vorn schauenden Trägers ist angedeutet.

Der Schutzhelm 100 umfasst folgende Bestandteile:
- eine gewölbte Helmschale 1 aus einem harten Material,
- ein verschwenkbares Visier 7,
- eine weiteres Visier in Form einer verschwenkbaren Sonnenbrille 22,
- eine gewölbte Dämpfungsschale 2, die innen in die Helmschale 1 eingelegt ist und kinetische Energie absorbiert,
- ein hufeisenförmiges vorderes Haltering-Teil 3, das durch zwei Schraubverbindungen 18.1, 18.r mit der Helmschale 1 verbunden ist und zum äußeren Bestandteil gehört,
- ein zentrales hinteres Haltering-Teil 5, das durch zwei weitere Schraubverbindungen 13.1, 13.r mit der Helmschale 1 verbunden ist und ebenfalls zum äußeren Bestandteil gehört,
- ein optionales starres Zwischenstück 10 mit einem gebogenen Vorsprung 23 und einem pilzförmigen Vorsprung 17.2,
- ein vorderes Tragering-Teil 6, das direkt oder über mit dem vorderen Haltering-Teil 3 verbunden ist, das einen fest montierten oder drehbar gelagerten Vorsprung 21 aufweist und das zum inneren Bestandteil gehört,
- ein gebogenes linkes hinteres Tragering-Teil 4.l und ein gebogenes rechtes hinteres Tragering-Teil 4.r, die beide zum inneren Bestandteil gehören und von einer Hinterkopfstütze 8 gehalten werden,
- die Hinterkopfstütze 8, die mit den beiden hinteren Tragering-Teilen 4.l und 4.r verbunden und an dem zentralen hinteren Haltering-Teil 5 befestigt ist,
- eine nicht gezeigte Innenausstattung in Form einer Kopfspinne, welche mindestens ein textiles Bauteil umfasst und welche oben am Kopf des Trägers anliegt, und
- ein drehbares Handrad 9, das außen an der Helmschale 1 angeordnet ist und das der Träger drehen kann, um die beiden hinteren Tragering-Teile 4.l und 4.r relativ zum hinteren Haltering-Teil 5 zu verschieben und dadurch die Kopfweite des Schutzhelms 100 zu verändern.

Die Indices .l und .r bezeichnen ein linkes bzw. ein rechtes Bauteil.

Die beiden hinteren Tragering-Teile 4.l und 4.r sind durch jeweils zwei lösbare Rastverbindungen mit dem vorderen Tragering-Teil 6 verbunden. Diese beiden Rastverbindungen werden dadurch hergestellt, dass zwei Paare von seitlichen Vorsprüngen 24.1 und 24.r in jeweils ein Paar von korrespondierenden seitlichen Aussparungen an den beiden hinteren Tragering-Teilen 4.l und 4.r eingreifen. Das linke hintere Tragering-Teil 4.l ist durch eine Rastverbindung 19.1 mit dem vorderen Haltering-Teil 3 verbunden, das rechte hintere Tragering-Teil 4.r durch eine Rastverbindung 19.r. Das Visier 7 ist durch zwei Schraubverbindungen 18.1, 18.r verschwenkbar mit dem vorderen Haltering-Teil 3 verbunden. Das weitere Visier 22 ist durch zwei Schraubverbindungen 20.1, 20.r verschwenkbar mit dem vorderen Haltering-Teil 3 verbunden. Das starre Zwischenstück 10 überbrückt den Abstand zwischen dem vorderen Tragering-Teil 6 und dem vorderen Haltering-Teil 3. Der gebogene Vorsprung 23 des Zwischenstücks 10 umgreift von unten und von vorn das vordere Haltering-Teil 3.

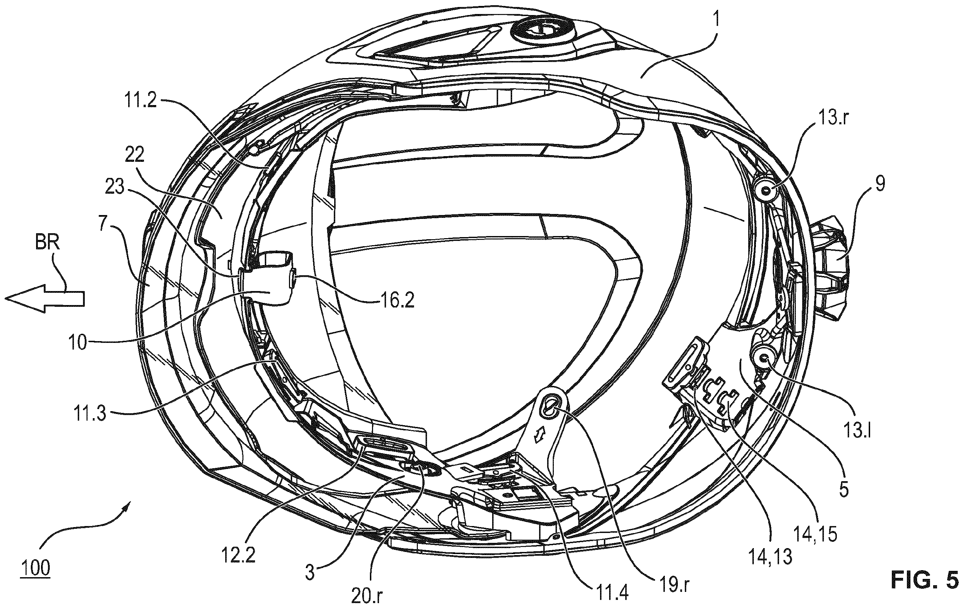

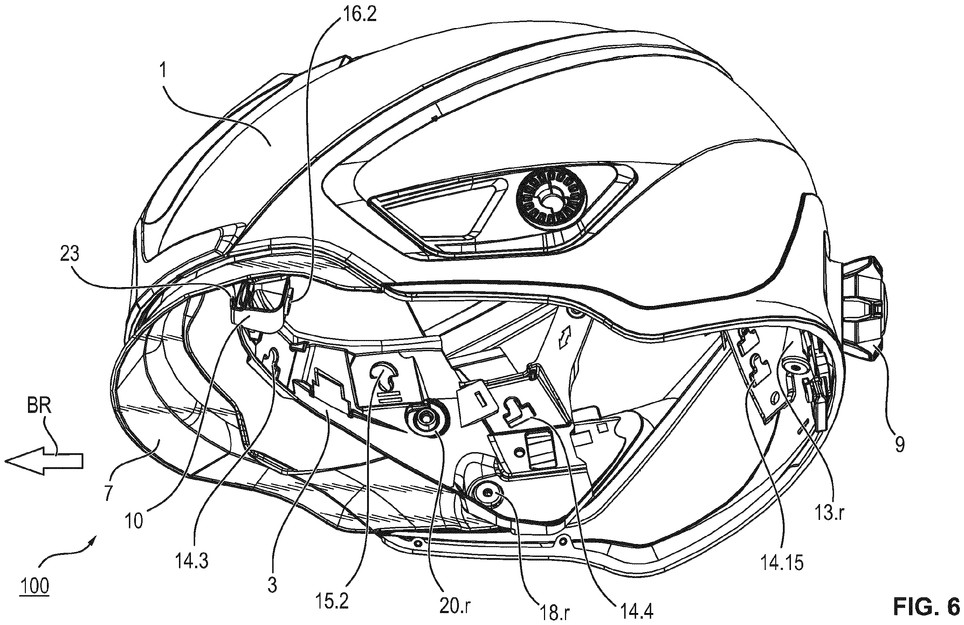

In Figur 5 und Figur 6 sind die Dämpfungsschale 2 und die Tragering-Teile 4.1, 4.r, 6 fortgelassen.

Im Ausführungsbeispiel lässt sich die Innenausstattung lösbar mit dem äußeren Bestandteil der Tragstruktur 3, 4.l, 4.r, 5, 6, 8, 10 verbinden. Die Innenausstattung ist nicht mit dem inneren Bestandteil 3, 5 verbunden, sodass eine Veränderung der bereitgestellten Kopfweite keinen Einfluss auf den Sitz der Innenausstattung in der Helmschale 1 hat. Möglich ist auch, dass ein textiles Bauteil der Innenausstattung sich lösbar mit dem inneren Bestandteil 3, 5 der Tragstruktur verbinden lässt.

Im Ausführungsbeispiel lässt sich die Innenausstattung mithilfe von mehreren Verbindungseinheiten lösbar mit einem Haltering-Teil 3, 5 verbinden. Jede Verbindungseinheit ermöglicht es, eine lösbare formschlüssige Verbindung zwischen jeweils einem textilen Bauteil der Innenausstattung und einem Haltering-Teil 3, 5 herzustellen. Diese formschlüssige Verbindung kann die Form einer Rastverbindung - oft auch Schnappverbindung genannt - haben oder auch die Form einer Druckknopf-Verbindung oder Knebelknopf-Verbindung.

Jede Verbindungseinheit umfasst jeweils
- eine tragstrukturseitige Komponente, die zur Tragstruktur gehört, im Ausführungsbeispiel zu einem Haltering-Teil 3 oder 5, und
- eine innenausstattungsseitige Komponente, die zu einem textilen Bauteil der Innenausstattung gehört.

Im Ausführungsbeispiel hat jede tragstrukturseitige Komponente die Form eines Befestigungselements mit einem Vorsprung. Jede innenausstattungsseitige Komponente umfasst eine Aussparung. Bei hergestellter Verbindung ist der Vorsprung durch die Aussparung hindurchgeführt und wird in der Aussparung gehalten, sodass er nicht von allein wieder aus der Aussparung gleiten oder rutschen kann.

In Figur 2 bis Figur 6 sind beispielhaft mehrere Befestigungselemente 11.1, 11.2, ... eines ersten Befestigungs-Typs dargestellt. Diese Befestigungselemente 11.1, 11.2, ... des ersten Befestigungs-Typs halten eine Innenausstattung mit textilen Bauteilen, hier in Form einer Kopfspinne, an dem vorderen Haltering-Teil 3 und sind mit Bändern dieser Kopfspinne verbunden. Außerdem sind Befestigungselemente 12.1, 12.2 eines zweiten Befestigungs-Typs dargestellt, welche mit einem anderen Band der Kopfspinne oder eines anderen textilen Bauteils verbunden sind.

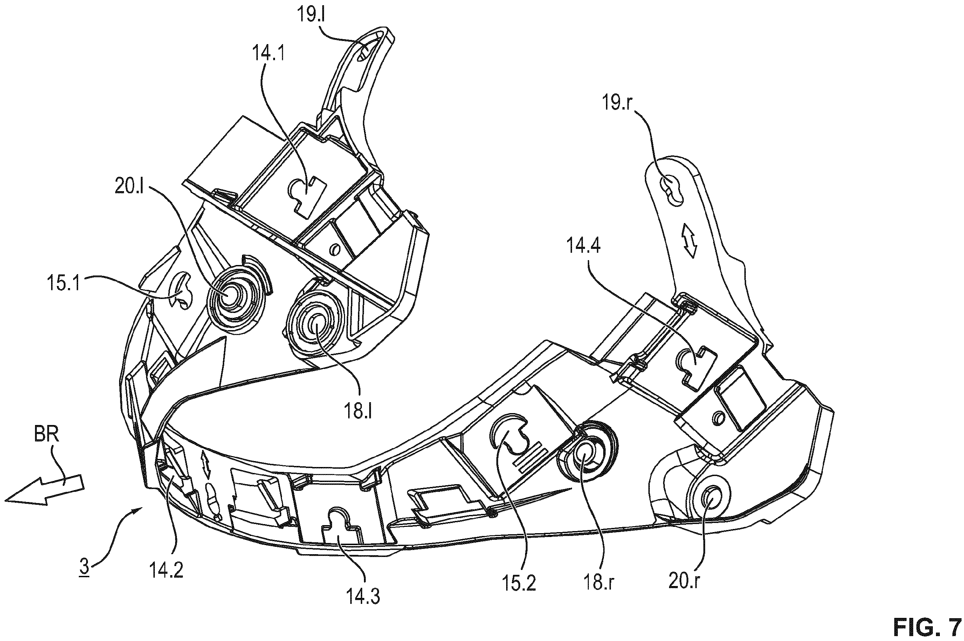

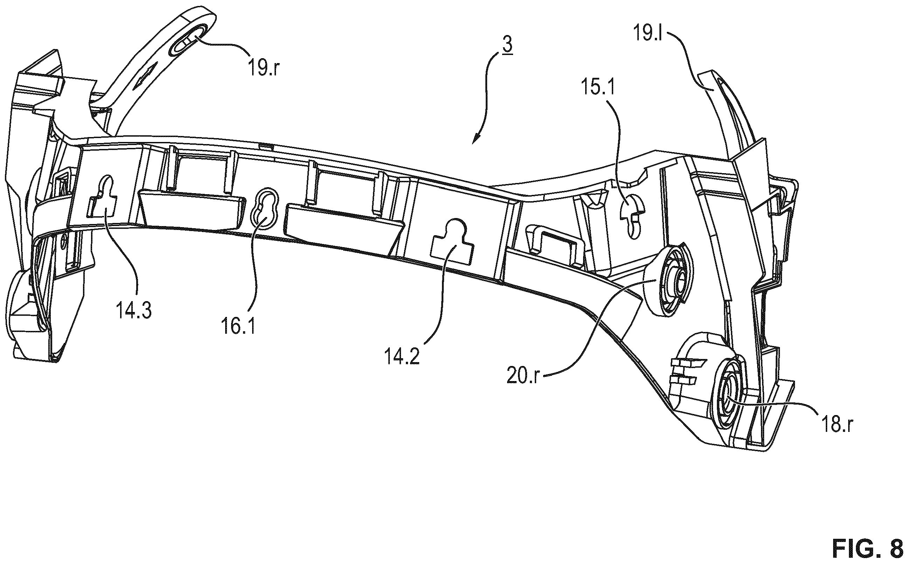

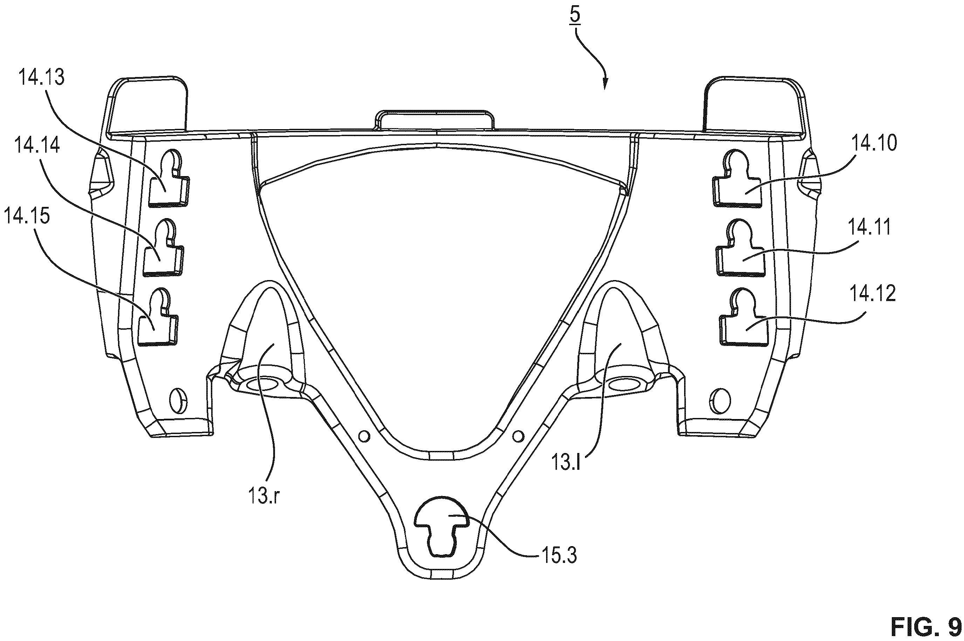

Figur 7 und Figur 8 zeigen das gebogene vordere Haltering-Teil 3 so, dass in Figur 7 die Blickrichtung BR schräg nach links unten zeigt und in Figur 8 zum Betrachter hin. Figur 9 zeigt das gebogene hinteren Haltering-Teil 5 so, dass die Blickrichtung BR zum Betrachter hin zeigt.

Das vordere Haltering-Teil 3 weist eine Reihe von Aussparungen 14.1, 14.2, ... eines ersten Aussparungs-Typs sowie eine Reihe von Aussparungen 15.1, 15.2, ... eines zweiten Aussparungs-Typs auf. Das hintere Haltering-Teil 5 weist zwei Spalten mit jeweils drei Aussparungen 14.10, ..., 14.15 auf. Zwei korrespondierende Befestigungselemente lassen sich in zwei nebeneinander liegende Aussparungen 14.10, ..., 14.15 einsetzen. Drei Reihen mit jeweils zwei nebeneinander angeordneten Aussparungen sind vorhanden, und daher lassen sich drei unterschiedliche Höhen erzielen. Jede Aussparung 14.1, 14.2, ... des ersten Aussparungs-Typs vermag jeweils ein Befestigungselement 11.1, 11.2, ... des ersten Befestigungs-Typs aufzunehmen und zu halten. Jede Aussparung 15.1, 15.2, ... des zweiten Aussparungs-Typs vermag jeweils ein Befestigungselement 12.1, 12.2, ... des zweiten Befestigungs-Typs aufzunehmen und zu halten.

Der erste Befestigungs-Typ und der erste Aussparungs-Typ bilden zusammen einen ersten Verbindungs-Typ. Der zweite Befestigungs-Typ und der zweite Aussparungs-Typ bilden zusammen einen zweiten Verbindungs-Typ.

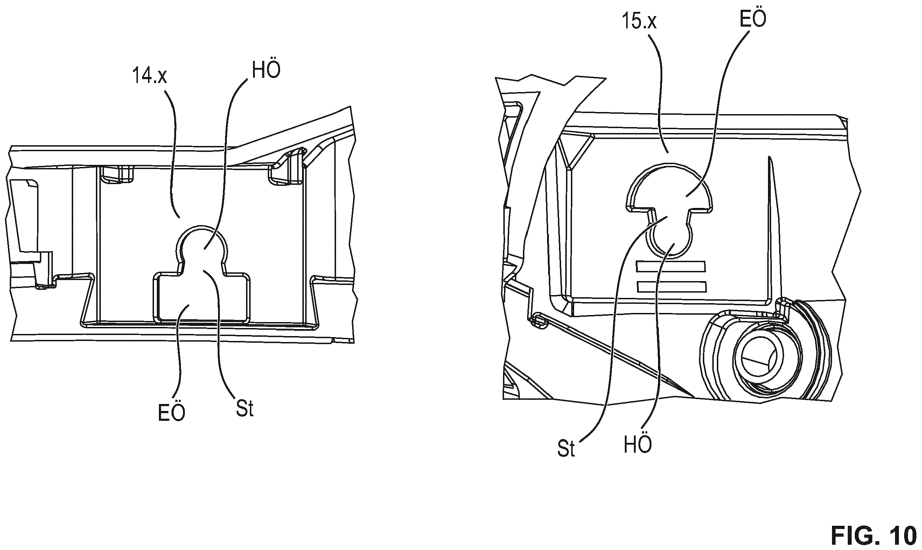

Figur 10 zeigt eine beispielhafte Aussparung 14.x des ersten Aussparungs-Typs und eine beispielhafte Aussparung 15.x des zweiten Aussparungs-Typs. Jede Aussparung 14.x, 15.x weist jeweils eine Einführöffnung EÖ, eine Halteöffnung HÖ und einen Steg St zwischen der Einführöffnung EÖ und der Halteöffnung HÖ auf.

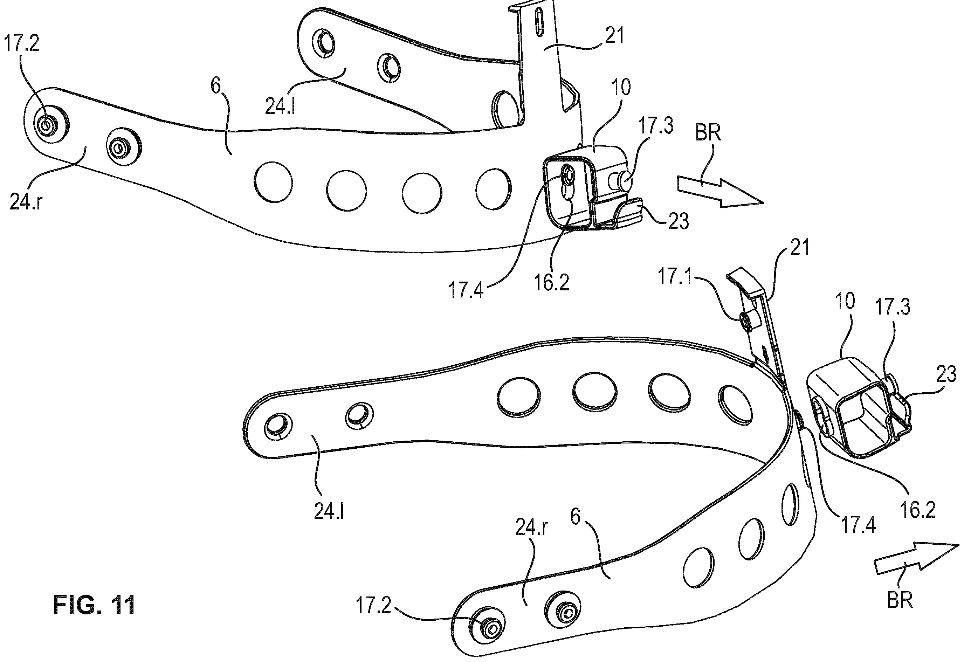

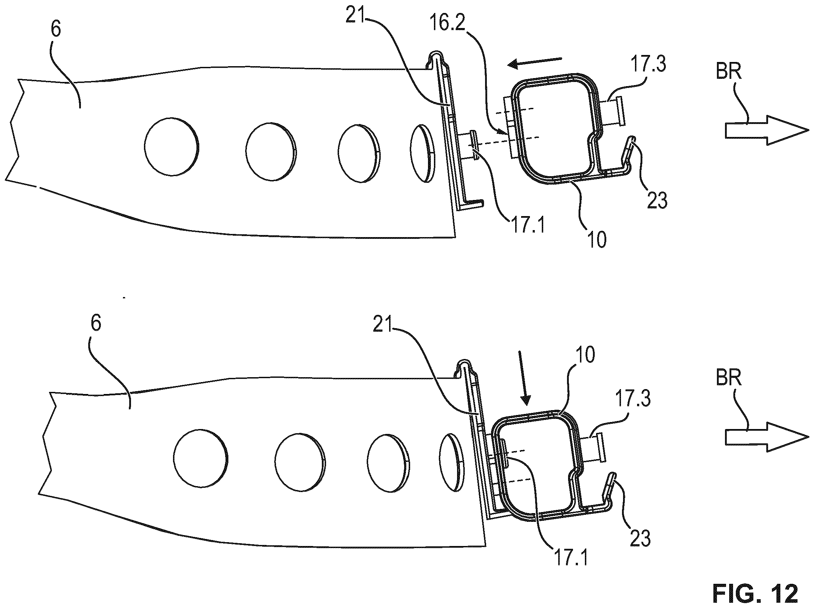

Figur 11 und Figur 12 zeigen das vordere Tragering-Teil 6 mit dem nach oben zeigenden Vorsprung 21 und das starre Zwischenstück 10 mit dem gebogenen Vorsprung 23 in zwei perspektivischen Darstellungen aus zwei unterschiedlichen Betrachtungsrichtungen. Am Vorsprung 21 befindet sich ein pilzförmiges Befestigungselement 17.1. In das Zwischenstück 10 ist ein Loch 16.2 eingelassen. In Figur 11 oben ist eine Realisierungsform gezeigt, bei welcher das Zwischenstück 10 fest mit dem Vorsprung 21 verbunden ist und das Befestigungselement 17.1 nach hinten zeigt. In Figur 11 unten und Figur 12 ist eine alternative Realisierungsform gezeigt, bei welcher der Vorsprung 21 relativ zum vorderen Tragering-Teil 6 um eine horizontale Achse drehbar ist. Falls der Vorsprung 21 herabgeklappt ist, zeigt das Befestigungselement 17.1 nach vorn. Das Zwischenstück 10 lässt sich dergestalt auf das Befestigungselement 17.1 aufstecken, dass das Befestigungselement 17.1 durch die Aussparung 16.2 hindurch greift.

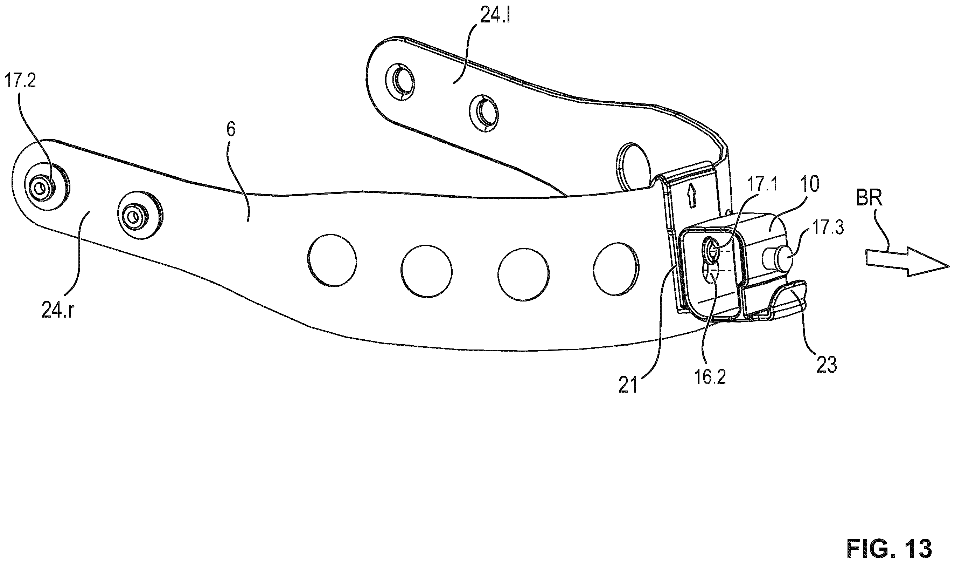

Figur 13 zeigt das rechte hintere Tragering-Teil 4.r. Zu sehen sind Befestigungselemente 17.1, 17.2, ... eines dritten Befestigungs-Typs und Aussparungen 16.1, 16.2 eines dritten Aussparungs-Typs. Jede Aussparung 16.1, 16.2 des dritten Aussparungs-Typs vermag jeweils ein Befestigungselement 17.1, 17.2, ... eines dritten Befestigungs-Typs aufzunehmen. Das Befestigungselement 17.1 ist am Vorsprung 21 befestigt.

Anmerkung: Die Befestigungselemente 17.2 befestigen das Tragering-Teil 6 an korrespondierenden Aussparungen in einem Haltering-Teil 4.1, 4.r. Befestigungselemente und Aussparungen, um die Innenausstattung an der Tragstruktur zu befestigen, können genauso aufgebaut sein.

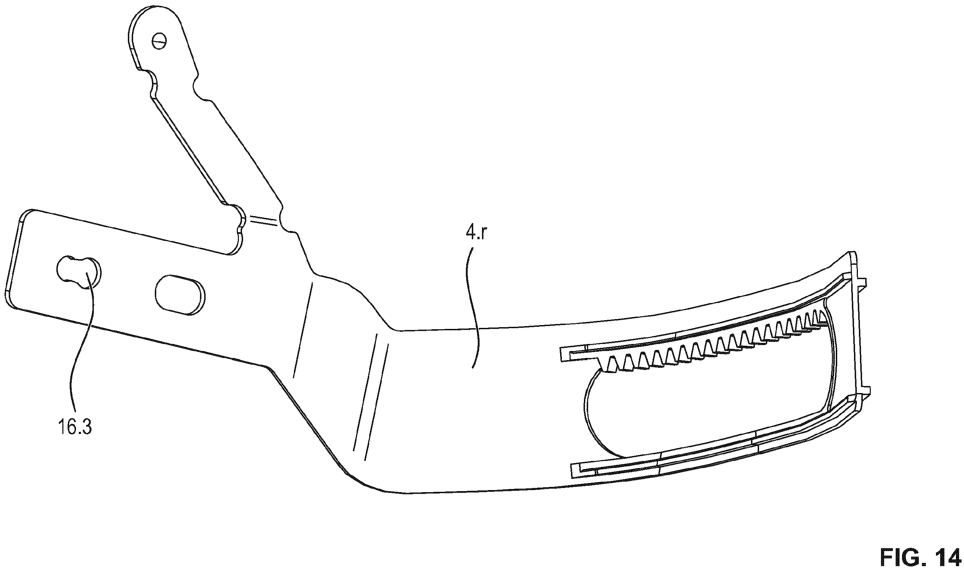

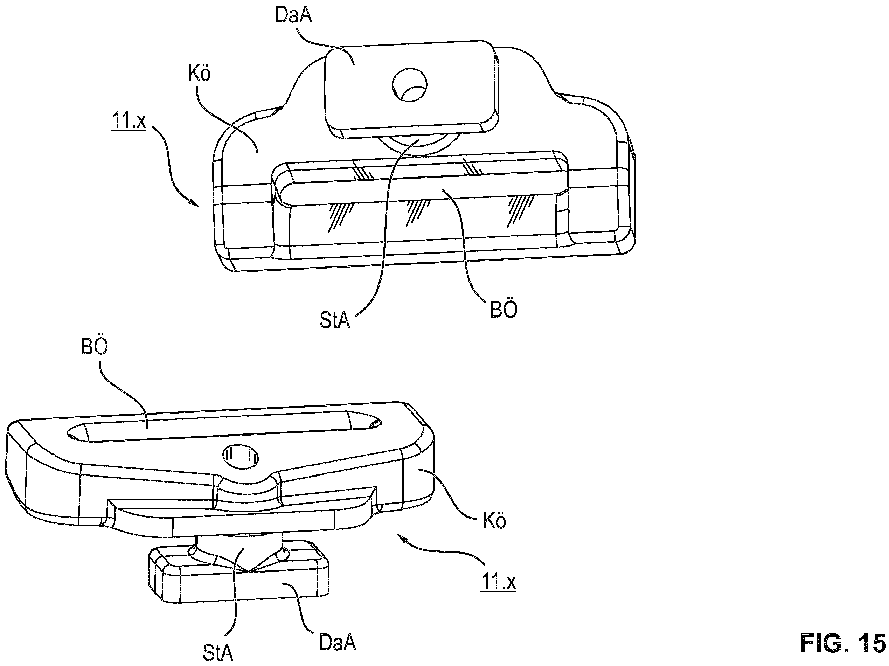

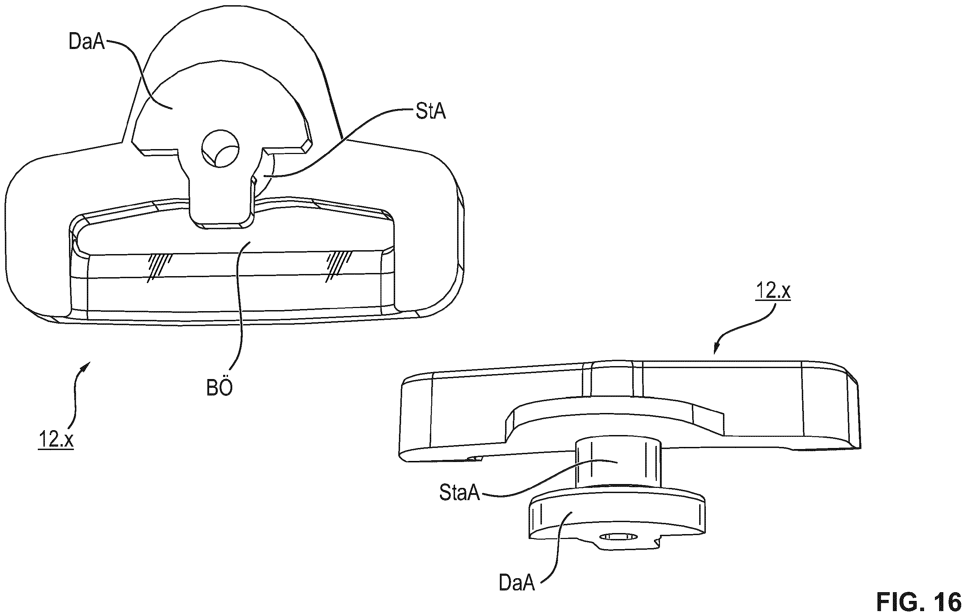

Figur 14 zeigt ein beispielhaftes Befestigungselement 11.x des ersten Befestigungs-Typs aus zwei verschiedenen Betrachtungsrichtungen. Figur 15 zeigt ein beispielhaftes Befestigungselement 12.x des zweiten Befestigungs-Typs aus zwei verschiedenen Betrachtungsrichtungen. Jedes Befestigungselement 11.x, 12.x, 17.x umfasst jeweils
- einen Befestigungselement-Körper Kö,
- eine Bandöffnung BÖ im Befestigungselement-Körper Kö, durch die hindurch ein textiles Band gezogen werden kann, um das Befestigungselement 11.x, 12.x, 17.x an dem Band zu befestigen,
- einen Dachabschnitt DaA und
- einen Stammabschnitt StA zwischen dem Dachabschnitt DaA und dem Befestigungselement-Körper Kö.

Der Dachabschnitt DaA steht in jeder Richtung über den Stammabschnitt StA über und ist flächig mit dem Stammabschnitt StA verbunden.

Ein Befestigungselement 11.x, 12.x, 17.x wird wie folgt lösbar an einem aufnehmenden Bauteil, beispielsweise an einem Haltering-Teil 2, 5 oder an einem Tragering-Teil 4.1, 4.r, 6, befestigt, wodurch eine lösbare formschlüssige Verbindung hergestellt wird:
- Der Dachabschnitt DaA wird in eine Einführrichtung durch die Einführöffnung EÖ hindurchgeschoben.
- Das Befestigungselement 11.x, 12.x, 17.x wird in eine Halterichtung durch den Steg St hindurch auf die Halteöffnung HÖ zu geschoben, bis der Stammabschnitt StA vollständig von der Halteöffnung HÖ umgeben ist. Die Halterichtung steht senkrecht oder schräg auf die Einführrichtung.

Das aufnehmende Bauteil ist aus einem reversibel verformbaren Material hergestellt, und zwar vollständig oder zumindest in dem Bereich, der den Steg St umgibt. Die Breite des Stammabschnitts StA ist größer als die Breite des Stegs St, so dass der Stammabschnitt StA beim Einführen den Steg St reversibel verformt. Der Stammabschnitt StA kann wegen der größeren Breite nicht von allein durch den Steg St hindurch zurück zur Einführöffnung EÖ gleiten. Hingegen tritt zwischen dem Umfang des Stammabschnitts StA und dem Rand der Halteöffnung HÖ ein Spalt auf, sodass das Befestigungselement 11.x, 12.x, 17.x sich relativ zu dem aufnehmenden Bauteil drehen kann.

Ein Befestigungselement 11.x, 12.x, 17.x stellt eine innenausstattungsseitige Komponente bereit. Die Einführöffnung EÖ, die Halteöffnung HÖ und der Steg St gehören zu einer Aussparung 14.x, 15.x, 16.x, welches eine korrespondierende tragstrukturseitige Komponente bereitstellt. Ein Befestigungselement 11.x, 12.x, 17.x lässt sich also in eine passende Aussparung 14.x, 15.x, 16.x einsetzen und bildet dann eine lösbare formschlüssige Verbindung.

Die Befestigungselemente 11.x, 12.x, 17.x gehören in dieser Ausgestaltung zu jeweils einer innenausstattungsseitigen Komponente, die Aussparungen 14.x, 15.x, 16.x gehören zu jeweils einer tragstrukturseitigen Komponente. In einer anderen Ausgestaltung umfasst jede tragstrukturseitige Komponente jeweils ein Halteelement für das Befestigungselement, z.B. eine Klammer oder einen Clip, aber nicht notwendigerweise einen Steg und nicht notwendigerweise einen Stammabschnitt. Das Befestigungselement 11.x, 12.x, 17.x wird durch die Einführöffnung EÖ hindurchgeschoben und mittels des Halteelements gehalten. Bei dieser anderen Ausgestaltung wird die lösbare formschlüssige Verbindung auf diese Weise hergestellt.

Die Befestigungselemente eines Befestigungs-Typs haben alle die gleiche geometrische Form und die gleichen Abmessungen, zumindest in einer Ebene senkrecht zur Einführrichtung. Hingegen unterscheiden sich die Befestigungselemente von zwei verschiedenen Befestigungs-Typen im Ausführungsbeispiel durch ihre geometrischen Formen und / oder durch mindestens eine Abmessung, zumindest in der Ebene senkrecht zur Einführrichtung. Entsprechend haben die Aussparungen eines Aussparungs-Typs in der Ebene, in der sich die Aussparung erstreckt, alle die gleiche geometrische Form und die gleichen Abmessungen. Die Aussparungen von zwei verschiedenen Aussparungs-Typen unterscheiden sich durch ihre geometrischen Formen und / oder durch mindestens eine Abmessung voneinander. Jeder Befestigungs-Typ ist genau einem Aussparungs-Typ zugeordnet. Ein Befestigungselement 11.x, 12.x, 17.x lässt sich in eine Aussparung 14.x, 15.x, 16.x des zugeordneten Aussparungs-Typs einführen und wird dort gehalten, ohne dass es von allein wieder herausrutschen kann.

Die unterschiedlichen Befestigungs-Typen und die unterschiedlichen Aussparungs-Typen stellen somit eine mechanische Codierung bereit. Mit anderen Worten: Jeder Befestigungs-Typ ist zu genau einem Aussparungs-Typ kompatibel, und umgekehrt ist jeder Aussparungs-Typ zu genau einem Befestigungs-Typ kompatibel. In manchen nicht kompatiblen Kombinationen von Befestigungselement und Aussparung ist es nicht möglich, ein Befestigungselement zerstörungsfrei in eine Aussparung eines falschen, weil nicht zugeordneten Aussparungs-Typs einzuführen, weil die Aussparung zu klein ist. Bei anderen möglichen Kombinationen ist eine falsche Aussparung so groß, dass das Befestigungselement von allein wieder aus der Aussparung fällt oder rutscht, also keine dauerhafte Verbindung herzustellen vermag und daher offensichtlich nicht zur Aussparung passt. Die Erfindung reduziert somit die Gefahr, dass die Innenausstattung nach einer Reinigung oder einem Austausch auf eine falsche Weise im Inneren des Schutzhelms 100 angebracht wird.

Unabhängig vom Befestigungs-Typ und vom Aussparungs-Typ lässt sich jedes Befestigungselement auf die gleiche, oben beschriebene Weise in eine Aussparung des zugeordneten Aussparungs-Typs einführen. Dieses Einführen ist intuitiv, insbesondere weil offensichtlich ist, welches Befestigungselemente in welche Aussparung passt und in welche nicht.

**Bezugszeichenliste**

| | |
|---|---|
| 1 | gewölbte Helmschale aus einem harten Material, an welcher die Tragstruktur 3, 4.1, 4.r, 5, 6, 8, 10 befestigt ist |
| 2 | gewölbte Dämpfungsschale, innen in die Helmschale 1 eingefügt |
| 3 | vorderes Haltering-Teil, durch zwei Schraubverbindungen 18.l, 18.r mit der Helmschale 1 verbunden, gehört zum äußeren Bestandteil der Tragstruktur, bildet zusammen mit dem hinteren Haltering-Teil 5 einen umlaufenden Haltering |
| 4.l | linkes hinteres Tragering-Teil, mit dem vorderen Tragering-Teil 6 gelenkig verbunden, gehört zum inneren Bestandteil der Tragstruktur |
| 4.r | rechtes hinteres Tragering-Teil, mit dem vorderen Tragering-Teil 6 gelenkig verbunden, gehört zum inneren Bestandteil der Tragstruktur |
| 5 | hinteres Haltering-Teil, durch die Schraubverbindungen 13.l und 13.r mit der Helmschale 1 verbunden, gehört zum äußeren Bestandteil der Tragstruktur, bildet zusammen mit dem vorderen Haltering-Teil 3 einen umlaufenden Haltering |
| 6 | vorderer Tragering, mit den beiden hinteren Tragering-Teilen 4.l und 4.r verbunden, gehört zum inneren Bestandteil der Tragstruktur, bildet zusammen mit den beiden hinteren Tragering-Teilen 4.l und 4.r einen umlaufenden Tragering |
| 7 | Visier, mit zwei Schraubenverbindungen 20.1, 20.r verschwenkbar an der Helmschale 1 befestigt |
| 8 | Hinterkopfstütze, mit dem hinteren Haltering-Teil 5 verbunden, gehört zum inneren Bestandteil der Tragstruktur |
| 9 | Handrad, mit dem ein Träger die Kopfweite des Schutzhelms 100 verändert |
| 10 | mittig angeordnetes starres Zwischenstück, welches das vordere Tragering-Teil 6 mit dem vorderen Haltering-Teil 3 verbindet, |
| 11.1, 11.2, ... | Befestigungselement des ersten Befestigungs-Typs, kann von einer Aussparung 14.1, 14.2, ... des ersten Aussparungs-Typs aufgenommen werden |
| 12.1, 12.2, ... | Befestigungselement des zweiten Befestigungs-Typs, kann von einer Aussparung 15.1, 15.2, ... des zweiten Aussparungs-Typs aufgenommen werden |
| 13.l, 13.r | Schraubverbindung, mit der das hintere Haltering-Teil 5 an der Helmschale 1 befestigt ist |
| 14.1, 14.2, ... | Aussparung des ersten Aussparungs-Typs, vermag ein Befestigungselement 11.1, 11.2, ... des ersten Befestigungs-Typs aufzunehmen |
| 15.1, 15.2,... | Aussparung des zweiten Aussparungs-Typs, vermag ein Befestigungselement 12.1, 12.2, ... des zweiten Befestigungs-Typs aufzunehmen |
| 16.1, 16.2,... | Aussparung des dritten Aussparungs-Typs, vermag ein Befestigungselement 17.1, 17.2, ... des dritten Befestigungs-Typs aufzunehmen |
| 17.1, 17.2, ... | Befestigungselement des zweiten Befestigungs-Typs, kann von einer Aussparung 16.1, 16.2, ... des dritten Aussparungs-Typs aufgenommen werden |
| 18.l, 18.r | Schraubverbindungen, mit denen das vordere Haltering-Teil 3 an der Helmschale 1 befestigt ist |
| 19.l | Rastverbindung, welche das linke hintere Tragering-Teil 4.l mit dem vorderen Haltering-Teil 3 verbindet |
| 19.r | Rastverbindung, welche das rechte hintere Tragering-Teil 4.r mit dem vorderen Haltering-Teil 3 verbindet |
| 20.1, 20.r | Schraubverbindungen, mit denen das Visier 7 an dem vorderen Haltering-Teil 3 befestigt ist |
| 21 | nach oben zeigender Vorsprung am vorderen Tragering-Teil 6, kann in einer Realisierungsform um eine horizontale Drehachse gedreht werden |
| 22 | Sonnenbrille in Form eines weiteren verschwenkbaren Visiers |
| 23 | Vorsprung am Zwischenstück 10, umgreift das vordere Haltering-Teil 3 |
| 24.l | Paar von seitlichen Vorsprüngen an dem vorderen Tragering-Teil 6, greifen in korrespondierende Aussparungen an dem linken hinteren Tragering-Teil 4.l ein |
| 24.r | Paar von seitlichen Vorsprüngen an dem vorderen Tragering-Teil 6, greifen in korrespondierende Aussparungen an dem hinteren Tragering-Teil 4.r ein |
| 100 | Schutzhelm, umfasst die Helmschale 1, die Dämpfungsschale 2, das Visier 7, die Haltering-Teile 3 und 5, die Tragering-Teile 4.1, 4.r, 6, das Zwischenstück 10 und das Handrad 9 sowie eine Innenausstattung |
| BÖ | Bandöffnung eines Befestigungselements 11.x, 12.x, 17.x |
| BR | Blickrichtung eines Trägers des Schutzhelms 100, der geradeaus nach vorn blickt |
| DaA | Dachabschnitt eines Befestigungselements 11.x, 12.x, steht über den Stammabschnitt StA über |
| EÖ | Einführöffnung einer Aussparung 14.x, 15.x, 16.x |
| HÖ | Halteöffnung einer Aussparung 14.x, 15.x, 16.x |
| Kö | Befestigungselement-Körper eines Befestigungselements 11.x, 12.x, 17.x, weist die Bandöffnung BÖ auf |
| St | Steg zwischen der Einführöffnung EÖ und der Halteöffnung HÖ |
| StA | Stammabschnitt eines Befestigungselements 11.x, 12.x, 17.x, fest mit dem Befestigungselement-Körper Kö verbunden, bei hergestellter Verbindung durch die Halteöffnung HÖ geführt |

## Patentansprüche

1. Schutzhelm (100) umfassend
- eine gewölbte Helmschale (1),
- eine Tragstruktur (3, 4.1, 4.r, 5, 6, 8, 10),
- eine Innenausstattung und
- mindestens zwei Verbindungseinheiten,
wobei der Schutzhelm (100) so ausgestaltet ist, dass die Innenausstattung in Kontakt mit dem Kopf eines Trägers des Schutzhelms (100) kommt,
wobei die Tragstruktur (3, 4.1, 4.r, 5, 6, 8, 10)
- innen an der Helmschale (1) befestigt ist und
- dazu ausgestaltet ist, die Innenausstattung zu tragen,
wobei jede Verbindungseinheit dazu ausgestaltet ist, die Innenausstattung lösbar mit der Tragstruktur (3, 4.1, 4.r, 5, 6, 8, 10) zu verbinden,
wobei jede Verbindungseinheit jeweils
- eine zur Tragstruktur (3, 4.l 4.r, 5, 6, 8, 10) gehörende tragstrukturseitige Komponente (14.1, ..., 15.1, ..., 16.1, ...) und
- eine zur Innenausstattung gehörende innenausstattungsseitige Komponente (11.1, ..., 12.1, ..., 17.1, ...) umfasst,
wobei jede tragstrukturseitige Komponente (14.1, ..., 15.1, ..., 16.1, ...) und jede innenausstattungsseitige Komponente (11.1, ..., 12.1, ..., 17.1, ...) jeweils zu genau einem Verbindungs-Typ gehören,
**dadurch gekennzeichnet, dass**
der Schutzhelm (100) mindestens zwei unterschiedliche Verbindungs-Typen aufweist,
wobei eine tragstrukturseitige Komponente (14.1, ..., 15.1, ..., 16.1, ...) sich dann mit einer innenausstattungsseitigen Komponente (11.1, ..., 12.1, ..., 17.1, ...) verbinden lässt, um eine lösbare Verbindung zwischen der Tragstruktur (3, 4.l, 4.r, 5, 6, 8, 10) und der Innenausstattung herzustellen, wenn die beiden Komponenten zu demselben Verbindungs-Typ gehören, und
wobei eine tragstrukturseitige Komponente sich dann nicht mit einer innenausstattungsseitigen Komponente verbinden lässt oder die beiden Komponenten keine Verbindung zwischen der Tragstruktur (3, 4.l, 4.r, 5, 6, 8, 10) und der Innenausstattung herzustellen vermögen, wenn die beiden Komponenten zu zwei unterschiedlichen Verbindungs-Typen gehören.

2. Schutzhelm (100) nach Anspruch 1,
**dadurch gekennzeichnet, dass**
zwei innenausstattungsseitige Komponenten (11.1, ..., 12.1, ..., 17.1, ...) von zwei unterschiedlichen Verbindungs-Typen sich in ihren geometrischen Formen und / oder in mindestens einer Abmessung voneinander unterscheiden und / oder
zwei tragstrukturseitige Komponenten (11.1, ..., 12.1, ..., 17.1, ...) von zwei unterschiedlichen Verbindungs-Typen sich in ihren geometrischen Formen und / oder in mindestens einer Abmessung voneinander unterscheiden.

3. Schutzhelm (100) nach einem der vorhergehenden Ansprüche,
**dadurch gekennzeichnet, dass**
mindestens eine Verbindungseinheit, bevorzugt jede Verbindungseinheit, jeweils eine formschlüssige Verbindung bereitstellt, insbesondere
- eine Rastverbindung oder Schnappverbindung, oder
- eine Knopfverbindung, besonders bevorzugt eine Druckknopfverbindung.

4. Schutzhelm (100) nach einem der vorhergehenden Ansprüche,
**dadurch gekennzeichnet, dass**
mindestens eine Verbindungseinheit die Eigenschaften aufweist, dass
- die tragstrukturseitige Komponente (14.1, ..., 15.1, ..., 16.1, ...) der Verbindungseinheit eine Aussparung (EÖ, HÖ, St) umfasst und
- die innenausstattungsseitige Komponente (11.1, ..., 12.1, ..., 17.1, ...) der Verbindungseinheit einen Vorsprung (DaA, StA) umfasst,
wobei der Vorsprung (DaA, StA) bevorzugt hakenförmig oder pilzförmig ist, oder
mindestens eine Verbindungseinheit die Eigenschaften aufweist, dass
- die jeweilige innenausstattungsseitige Komponente (14.1, ..., 15.1, ..., 16.1, ...) der Verbindungseinheit eine Aussparung (EÖ, HO, St) umfasst und
- die tragstrukturseitige Komponente (11.1, ..., 12.1, ..., 17.1, ...) dieser Verbindungseinheit einen Vorsprung (DaA, StA) umfasst,
wobei der Vorsprung (DaA, StA) bevorzugt hakenförmig oder pilzförmig ist,
wobei bei hergestellter lösbarer Verbindung der Vorsprung (DaA, StA) in die Aussparung eingeführt ist.

5. Schutzhelm (100) nach Anspruch 4,
**dadurch gekennzeichnet, dass**
die Aussparung (EÖ, HO, St) der einen Komponente dieser Verbindungseinheit eine Einführöffnung (EÖ) umfasst und
die andere Komponente dieser Verbindungseinheit einen Körper (Kö) umfasst, an dem der Vorsprung (DaA, StA) befestigt ist,
wobei der Vorsprung (DaA, StA) durch die Einführöffnung (EÖ) hindurch bewegbar ist und
wobei bei hergestellter Verbindung der Vorsprung (DaA, StA) in der Aussparung (EÖ, HO, St) gehalten ist.

6. Schutzhelm (100) nach Anspruch 5,
**dadurch gekennzeichnet, dass**
der Vorsprung (DaA, StA)
- einen Dachabschnitt (DaA) und
- einen zwischen dem Körper (Kö) und dem Dachabschnitt (DaA) angeordneten Stammabschnitt (StA)
umfasst und
die Aussparung (EÖ, HO, St) zusätzlich
- eine Halteöffnung (HÖ) und
- einen Steg (St) zwischen der Einführöffnung (EÖ) und der Halteöffnung (HÖ)
umfasst,
wobei bei hergestellter Verbindung
- der Stammabschnitt (StA) durch die Halteöffnung (HÖ) hindurchgeführt ist und
- der Steg (St) eine Bewegung des Stammabschnitts (StA) auf die Einführöffnung (EÖ) zu verhindert.

7. Schutzhelm (100) nach Anspruch 5,
**dadurch gekennzeichnet, dass**
die Komponente mit der Aussparung ein Halteelement umfasst,
wobei bei hergestellter Verbindung das Halteelement den durch die Einführöffnung (EÖ) bewegten Vorsprung (DaA, StA) hält.

8. Schutzhelm (100) nach einem der Ansprüche 4 bis 7,
**dadurch gekennzeichnet, dass**
bei mindestens einem Verbindungs-Typ die tragstrukturseitige Komponente (14.1, ..., 15.1, ..., 16.1, ...) die Aussparung (EÖ, HÖ, St) und die innenausstattungsseitige Komponente (11.1, ..., 12.1, ..., 17.1, ...) den Vorsprung (DaA, StA) umfasst und
bei dem oder mindestens einem anderen Verbindungs-Typ die tragstrukturseitige Komponente (14.1, ..., 15.1, ..., 16.1, ...) den Vorsprung (DaA, StA) und die innenausstattungsseitige Komponente (11.1, ..., 12.1, ..., 17.1, ...) die Aussparung (EÖ, HO, St) umfasst.

9. Schutzhelm (100) nach einem der vorhergehenden Ansprüche,
**dadurch gekennzeichnet, dass**
die Tragstruktur (3, 4.1, 4.r, 5, 6, 8, 10)
- einen fest mit der Helmschale (1) verbundenen äußeren Bestandteil (3, 5), insbesondere einen Haltering, und
- einen inneren Bestandteil (4.1, 4.r, 6, 8), der am Kopf eines Trägers des Schutzhelms (100) anliegt, insbesondere einen Tragering,
umfasst,
wobei zwischen dem äußeren Bestandteil (3, 5) und dem Kopf des Trägers ein Abstand auftritt und
wobei jede tragstrukturseitige Komponente (11.1, ..., 12.1, ..., 17.1, ...) mit dem äußeren Bestandteil (3, 5) verbunden ist.

10. Computerprogramm, welches auf einem Rechner ausführbar ist und bei der Ausführung den Rechner dazu veranlasst, einen 3D-Drucker dergestalt anzusteuern, dass der angesteuerte 3D-Drucker
die Tragstruktur (3, 4.1, 4.r, 5, 6, 8, 10), die Innenausstattung und mindestens eine, bevorzugt jede Verbindungseinheit eines Schutzhelms nach einem der Ansprüche 1 bis 9 erzeugt.

## Claims

1. A protective helmet (100) comprising
- a curved helmet shell (1),
- a supporting structure (3, 4.1, 4.r, 5, 6, 8, 10),
- internal equipment and
- at least two connection units,
wherein the protective helmet (100) is configured such that the internal equipment comes into contact with the head of a wearer of the protective helmet (100),
wherein the supporting structure (3, 4.1, 4.r, 5, 6, 8, 10)
- is fixed to the inside of the helmet shell (1) and
- is configured to support the internal equipment,
wherein each connection unit is configured to connect the internal equipment detachably to the supporting structure (3, 4.1, 4.r, 5, 6, 8, 10),
wherein each connection unit respectively comprises
- a component (14.1, ..., 15.1, ..., 16.1, ...) on the supporting structure side which belongs to the supporting structure (3, 4.1, 4.r, 5, 6, 8, 10), and
- a component (11.1, ..., 12.1, ..., 17.1, ...) on the internal equipment side which belongs to the internal equipment,
wherein each component (14.1, ..., 15.1, ..., 16.1, ...) on the supporting structure side and each component (11.1, ..., 12.1, ..., 17.1, ...) on the internal equipment side belongs to exactly one connection type, **characterized in that**
the protective helmet (100) has at least two different connection types, wherein a component (14.1, ..., 15.1, ..., 16.1, ...) on the supporting structure side can then be connected to a component (11.1, ..., 12.1, ..., 17.1, ...) on the internal equipment side in order to produce a detachable connection between the supporting structure (3, 4.1, 4.r, 5, 6, 8, 10) and the internal equipment if the two components belong to the same connection type, and
wherein a component on the supporting structure side cannot be connected to a component on the internal equipment side or the two components are not able to produce any connection between the supporting structure (3, 4.1, 4.r, 5, 6, 8, 10) and the internal equipment if the two components belong to two different connection types.

2. The protective helmet (100) according to Claim 1,
**characterized in that**
two components (11.1, ..., 12.1, ..., 17.1, ...) of two different connection types on the internal equipment side differ from each another in their geometric shapes and/or in at least one dimension, and/or
two components (11.1, ..., 12.1, ..., 17.1, ...) of two different connection types on the supporting structure side differ from each other in their geometric shapes and/or in at least one dimension.

3. The protective helmet (100) according to one of the preceding claims, **characterized in that**
at least one connection unit, preferably each connection unit, provides a respective form-fitting connection, in particular
- a latching connection or snap-in connection, or
- a stud connection, particularly preferably a press-stud connection.

4. The protective helmet (100) according to one of the preceding claims, **characterized in that**
at least one connection unit has the properties that
- the component (14.1, ..., 15.1, ..., 16.1, ...) on the supporting structure side of the connection unit comprises a recess (EO, HÖ, St) and
- the component (11.1, ..., 12.1, ..., 17.1, ...) on the internal equipment side of the connection unit comprises a protrusion (DaA, StA),
wherein the protrusion (DaA, StA) is preferably hook-shaped or mushroom-shaped, or
at least one connection unit has the properties that
- the respective component (14.1, ..., 15.1, ..., 16.1, ...) on the internal equipment side of the connection unit comprises a recess (EO, HÖ, St) and
- the component (11.1, ..., 12.1, ..., 17.1, ...) on the supporting structure side of this connection unit comprises a protrusion (DaA, StA),
wherein the protrusion (DaA, StA) is preferably hook-shaped or mushroom-shaped,
wherein, when the detachable connection is produced, the protrusion (DaA, StA) is inserted into the recess.

5. The protective helmet (100) according to Claim 4,
**characterized in that**
the recess (EO, HO, St) of the one component of this connection unit comprises an insertion opening (EÖ) and
the other component of this connection unit comprises a body (Kö) to which the protrusion (DaA, StA) is fixed,
wherein the protrusion (DaA, StA) is movable through the insertion opening (EÖ) and
wherein, when the connection is produced, the protrusion (DaA, StA) is retained in the recess (EO, HO, St).

6. The protective helmet (100) according to Claim 5,
**characterized in that**
the protrusion (DaA, StA) comprises
- a roof section (DaA) and
- a stem section (StA) arranged between the body (Kö) and the roof section (DaA), and
the recess (EO, HO, St) additionally comprises
- a retaining opening (HO) and
- a web (St) between the insertion opening (EÖ) and the retaining opening (HO),
wherein, when the connection is produced
- the stem section (StA) is led through the retaining opening (HO) and
- the web (St) prevents any movement of the stem section (StA) towards the insertion opening (EO).

7. The protective helmet (100) according to Claim 5,
**characterized in that**
the component with the recess comprises a retaining element, wherein, when the connection is produced, the retaining element retains the protrusion (DaA, StA) moved through the insertion opening (EO).

8. The protective helmet (100) according to one of Claims 4 to 7, **characterized in that**
in at least one connection type, the component (14.1, ..., 15.1, ..., 16.1, ...) on the supporting structure side comprises the recess (EO, HÖ, St) and the component (11.1, ..., 12.1, ..., 17.1, ...) on the internal equipment side comprises the protrusion (DaA, StA), and
in the or at least one other connection type, the component (14.1, ..., 15.1, ..., 16.1, ...) on the supporting structure side comprises the protrusion (DaA, StA) and the component (11.1, ..., 12.1, ..., 17.1, ...) on the internal equipment side comprises the recess (EO, HO, St).

9. The protective helmet (100) according to one of the preceding claims, **characterized in that**
the supporting structure (3, 4.1, 4.r, 5, 6, 8, 10) comprises
- an outer component (3, 5) firmly connected to the helmet shell (1), in particular a retaining ring,
- an internal component (4.l, 4.r, 6, 8), which rests on the head of a wearer of the protective helmet (100), in particular a supporting ring,
wherein a distance is formed between the outer component (3, 5) and the head of the wearer, and wherein each component (11.1, ..., 12.1, ..., 17.1, ...) on the supporting structure side is connected to the outer component (3, 5).

10. A computer program, which can be executed on a computer and during the execution, causes the computer to activate a 3D printer in such a way that the activated 3D printer
produces the supporting structure (3, 4.l, 4.r, 5, 6, 8, 10), the internal equipment and at least one, preferably each, connecting unit of a protective helmet according to one of Claims 1 to 9.

## Revendications

1. Casque de protection (100) comprenant
- une coque bombée (1),
- une structure de support (3, 4.l, 4.r, 5, 6, 8, 10),
- un équipement intérieur et
- au moins deux unités de liaison,
ledit casque de protection (100) étant agencé de façon telle que l'équipement intérieur vienne en contact avec la tête d'un porteur dudit casque de protection (100),
la structure de support (3, 4.l, 4.r, 5, 6, 8, 10) étant
- fixée intérieurement à la coque (1) du casque et
- agencée de manière à porter l'équipement intérieur,
chaque unité de liaison étant agencée en vue de relier amoviblement ledit équipement intérieur à ladite structure de support (3, 4.l, 4.r, 5, 6, 8, 10),
chaque unité de liaison incluant, respectivement,
- un élément structurel (14.1,..., 15.1,..., 16.1,...) faisant partie de la structure de support (3, 4.l, 4.r, 5, 6, 8, 10) et situé côté structure de support et
- un élément structurel (11.1,..., 12.1,..., 17.1,...) faisant partie de l'équipement intérieur et situé côté équipement intérieur,
chaque élément structurel (14.1,..., 15.1,..., 16.1,...) situé côté structure de support et
chaque élément structurel (11.1,..., 12.1,..., 17.1,...) situé côté équipement intérieur
appartenant exactement à un type de solidarisation, à chaque fois,
**caractérisé par le fait que**
ledit casque de protection (100) présente au moins deux types de solidarisation différents,
sachant qu'un élément structurel (14.1,..., 15.1,..., 16.1,...) situé côté structure de support peut alors être relié à un élément structurel (11.1,..., 12.1,..., 17.1,...) situé côté équipement intérieur, afin d'instaurer une liaison libérable, entre ladite structure de support (3, 4.l, 4.r, 5, 6, 8, 10) et ledit équipement intérieur, lorsque les deux éléments structurels appartiennent au même type de solidarisation, et sachant que, lorsque lesdits deux éléments structurels appartiennent à deux types de solidarisation différents, un élément structurel situé côté structure de support ne peut pas être relié à un élément structurel situé côté équipement intérieur, ou bien lesdits deux éléments structurels ne sont pas à même d'instaurer une liaison entre ladite structure de support (3, 4.l, 4.r, 5, 6, 8, 10) et ledit équipement intérieur.

2. Casque de protection (100) selon la revendication 1,
**caractérisé par le fait que**
deux éléments structurels (11.1,..., 12.1,..., 17.1,...) situés côté équipement intérieur, relevant de deux types de solidarisation différents, se différencient l'un de l'autre quant à leurs formes géométriques et/ou quant à au moins un dimensionnement, et/ou
deux éléments structurels (11.1,..., 12.1,..., 17.1,...) situés côté structure de support, relevant de deux types de solidarisation différents, se différencient l'un de l'autre quant à leurs formes géométriques et/ou quant à au moins un dimensionnement.

3. Casque de protection (100) selon l'une des revendications précédentes,
**caractérisé par le fait**
**qu'**au moins une unité de liaison, de préférence chaque unité de liaison procure, respectivement, une liaison par complémentarité de formes, en particulier
- une liaison par crantage ou une liaison par déclic, ou
- une liaison par clipsage, une liaison par boutons-pression d'une manière particulièrement préférentielle.

4. Casque de protection (100) selon l'une des revendications précédentes,
**caractérisé par le fait**
**qu'**au moins une unité de liaison est douée des propriétés suivant lesquelles
- l'élément structurel (14.1,..., 15.1,..., 16.1,...) de ladite unité de liaison, situé côté structure de support, est muni d'un évidement (EÖ, HÖ, St) et
- l'élément structurel (11.1,..., 12.1,..., 17.1,...) de ladite unité de liaison, situé côté équipement intérieur, est pourvu d'une protubérance (DaA, StA), laquelle protubérance (DaA, StA) revêt préférentiellement la forme d'un crochet ou d'un champignon, ou bien
**qu'**au moins une unité de liaison est douée des propriétés suivant lesquelles
- l'élément structurel considéré (14.1,..., 15.1,..., 16.1,...) de ladite unité de liaison, situé côté équipement intérieur, est doté d'un évidement (EÖ, HÖ, St) et
- l'élément structurel (11.1,..., 12.1,..., 17.1,...) de cette unité de
liaison, situé côté structure de support, est nanti d'une protubérance (DaA, StA),
laquelle protubérance (DaA, StA) revêt préférentiellement la forme d'un crochet ou d'un champignon,
ladite protubérance (DaA, StA) étant introduite dans l'évidement à l'état instauré de la liaison libérable.

5. Casque de protection (100) selon la revendication 4,
**caractérisé par le fait que**
l'évidement (EÖ, HÖ, St) de l'un des éléments structurels de cette unité de liaison comprend un orifice d'insertion (EÖ) et
l'autre élément structurel de cette unité de liaison comprend un corps (Kö) auquel la protubérance (DaA, StA) est fixée,
sachant que ladite protubérance (DaA, StA) peut être mue de part en part à travers ledit orifice d'insertion (EÖ) et
sachant que ladite protubérance (DaA, StA) est retenue dans ledit évidement (EÖ, HÖ, St) à l'état instauré de la liaison.

6. Casque de protection (100) selon la revendication 5,
**caractérisé par le fait que**
la protubérance (DaA, StA) comprend
- une région sommitale (DaA) et
- une zone d'embase (StA) interposée entre le corps (Kö) et ladite région sommitale (DaA)
et
l'évidement (EÖ, HÖ, St) comprend, additionnellement,
- un orifice de retenue (HÖ) et
- une membrure (St) entre l'orifice d'insertion (EÖ) et ledit orifice de retenue (HÖ),
sachant qu'à l'état instauré de la liaison,
- ladite zone d'embase (StA) est introduite de part en part dans ledit orifice de retenue (HÖ) et
- ladite membrure (St) empêche un mouvement de ladite zone d'embase (StA) en direction dudit orifice d'insertion (EÖ).

7. Casque de protection (100) selon la revendication 5,
**caractérisé par le fait que**
l'élément structurel inclut un élément d'arrêt conjointement à l'évidement, sachant qu'à l'état instauré de la liaison, ledit élément d'arrêt retient la protubérance (DaA, StA) mise en mouvement à travers l'orifice d'insertion (EÖ).

8. Casque de protection (100) selon l'une des revendications 4 à 7, **caractérisé par le fait que**,
dans au moins un type de solidarisation, l'élément structurel (14.1,..., 15.1,..., 16.1,...) situé côté structure de support comprend l'évidement (EÖ, HÖ, St), et l'élément structurel (11.1,..., 12.1,..., 17.1,...) situé côté équipement intérieur comprend la protubérance (DaA, StA) et
dans l'autre, ou dans au moins un autre type de solidarisation, ledit élément structurel (14.1,..., 15.1,..., 16.1,...) situé côté structure de support comprend ladite protubérance (DaA, StA), et ledit élément structurel (11.1,..., 12.1,..., 17.1,...) situé côté équipement intérieur comprend ledit évidement (EÖ, HÖ, St).

9. Casque de protection (100) selon l'une des revendications précédentes,
**caractérisé par le fait que**
la structure de support (3, 4.l, 4.r, 5, 6, 8, 10) inclut
- une pièce structurelle extérieure (3, 5), en particulier une bague de retenue reliée rigidement à la coque (1) du casque, et
- une pièce structurelle intérieure (4.l, 4.r, 6, 8), en particulier un anneau de support en applique sur la tête d'un porteur dudit casque de protection (100),
sachant qu'un espacement est réservé entre ladite pièce structurelle extérieure (3, 5) et la tête dudit porteur et
sachant que chaque élément structurel (11.1,..., 12.1,..., 17.1,...) situé côté structure de support est relié à ladite pièce structurelle extérieure (3, 5).

10. Programme informatique pouvant être exécuté sur un ordinateur et incitant ledit ordinateur, lors de l'exécution, à piloter une imprimante 3D de façon telle que ladite imprimante 3D pilotée
produise la structure de support (3, 4.l, 4.r, 5, 6, 8, 10), l'aménagement intérieur et au moins une, de préférence chaque unité de liaison d'un casque de protection conforme à l'une des revendications 1 à 9.
